# EUROPÄISCHE PATENTSCHRIFT

(11) **EP 4 092 887 B1**
(45) Veröffentlichungstag und Bekanntmachung des Hinweises auf die Patenterteilung: **14.05.2025**
(21) Anmeldenummer: 22020030.7
(22) Anmeldetag: 02.02.2022
(51) Int. Cl.: H02K 15/03, H02K 15/16

(54) **ROTOR MIT EINER ROTATIONSACHSE FÜR EINE ELEKTRISCHE ANTRIEBSMASCHINE**
MOTOR VEHICLEROTOR WITH AN AXIS OF ROTATION FOR AN ELECTRIC DRIVE MACHINE
ROTOR DOTÉ D'UN AXE DE ROTATION POUR UN MOTEUR ÉLECTRIQUE D'ENTRAÎNEMENT

(30) Priorität: 18.05.2021 DE 102021112815
(43) Veröffentlichungstag der Anmeldung: 23.11.2022
(73) Patentinhaber: Dr. Ing. h.c. F. Porsche Aktiengesellschaft, 70435 Stuttgart (DE)
(72) Erfinder: Wurster, Peter, 70806 Kornwestheim (DE)

(56) Entgegenhaltungen:
- WO-A1-2021/032239
- DE-A1- 102013 102 408
- DE-A1- 102017 123 703
- US-A1- 2018 076 700

## Beschreibung

Die Erfindung betrifft einen Rotor mit einer Rotationsachse für eine elektrische Antriebsmaschine, ein Montageverfahren für einen solchen Rotor, eine Antriebsmaschine für einen Antriebsstrang, ein Kraftfahrzeug mit einer solchen Antriebsmaschine, ein Computerprogramm, sowie ein Computerprogrammprodukt mit einem solchen Computerprogramm zum Ausführen des Montageverfahrens.

Aus dem Stand der Technik sind elektrische Antriebsmaschinen bekannt, wobei ein Stator und ein Rotor zum Umwandeln von elektrischer Energie in ein Drehmoment (oder umgekehrt im Generatorbetrieb) vorgesehen sind. Bei einer solchen elektrischen Antriebsmaschine wird in der Regel eine Rotorwelle mit einer Vielzahl von untereinander magnetisch isolierten Blechen versehen, welche zu Blechpaketen gepackt sind. Die Blechpakete sind bei einer permanent erregten Synchronmaschine [PSM] mit Permanentmagneten bestückt, beispielsweise umfassend Neodym, Eisen und Bor oder Samarium und Kobalt. Die Blechpakete werden vorab bestückt oder noch ohne die Magnete auf der Rotorwelle positioniert. Im Vorfeld werden die Blechpakete auf ihre Konzentrizität (beziehungsweise Exzentrizität) vermessen. Die Exzentrizität ist die Abweichung der zentralen Achse des Innendurchmessers (also dem Sitz auf der Rotorwelle) zu dem Außendurchmesser des Blechpakets. Dann werden die Blechpakete in einem optimierten Prozess für eine möglichst geringe - Unwucht sortiert, zum Beispiel einander ausgleichend, auf der Rotorwelle positioniert und fixiert.

Es wurde festgestellt, dass bei einer Erwärmung auf eine Betriebstemperatur von beispielsweise 120 °C [einhundertundzwanzig Grad Celsius] bis 160 °C die Wärmeausdehnung der Blechpakete zu einem Biegemoment auf die Rotorwelle führt. Das führt bei einer elastischen Verformung zu einer reversiblen Unwucht im Bereich der Betriebstemperatur. Es kann aber auch zu einer Plastifizierung an der Rotorwelle und/oder den Blechpaketen kommen, sodass eine irreversible Unwucht entsteht. Diese Effekte entstehen im besten Fall in einer in-line-Auslagerung, also einer Inbetriebnahme in der Fertigungslinie, sodass diese mittels Auswuchten ausgleichbar sind. In der Regel entstehen solche Effekte aber auch im Betrieb beim Kunden und beeinträchtigen damit die Laufgüte des Rotors.

DE 10 2017 123 703 A1 offenbart eine Verfahren zur Montage von Läufern elektrischer Maschinen, wobei Fertigungsabweichungen der einzelnen Baugruppen des Läufers und eine daraus folgende Unwucht berücksichtigt werden, um unerwünschte Vibrationen, Geräusche oder einen vorzeitigen Ausfall zu vermeiden. Dabei wird für eine gesteigerte Genauigkeit vorgeschlagen, die Dicke und einen' Durchmesser der Blechpaketsegmente zu erfassen, um sodann sowohl die Axialpositionen als auch Umfangspositionen für die Blechpaketsegmente auf der Welle zu bestimmen.

US 2018 / 0 076 700 A1 offenbart beispielweise ein Verfahren und eine Vorrichtung, um Blöcke eines Rotorkerns einer elektrischen Maschine auszurichten., um eine Unwucht auszugleichen. Dabei ist vorgeschlagen die Höhe der Blöcke zu messen, um deren Gewichtverteilung zu ermitteln.

WO 2021 / 032 239 A1 offenbart ein Verfahren zur Herstellung eines Rotors für eine elektrische Maschine (PSM) sowie einen entsprechenden Rotor und eine entsprechende elektrische Maschine. Dabei ist vorgeschlagen, dass der mindestens eine Permanentmagnet erst nach der Montage des Grundkörpers, beispielsweise eines Blechpakets, in dessen Kavität verklebt ist.

DE 10 2013 102 408 A1 offenbart eine Rotoranordnung für eine elektrische Antriebsmaschine sowie eine elektrische Antriebsmaschine und ein elektrisches Antriebssystem, wobei das Massenträgheitsmoment eines Blechpakets gegenüber einem weiteren Blechpaket geändert ist, beispielsweise mittels Aussparungen und/oder Werkstoffelementen.

DE 10 2013 205 928 A1 offenbart beispielsweise einen permanent erregten Rotor für eine elektrische Maschine, der mehrere, entlang einer Umfangsrichtung angeordnete Magnetpole aufweist. Dabei weist eine entsprechende elektrische Maschine ferner einen Stator auf und ist zum Antrieb eines Kraftfahrzeugs einsetzbar.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft einen Rotor mit einer Rotationsachse für eine elektrische Antriebsmaschine, aufweisend zumindest die folgenden Komponenten:
- eine Mehrzahl von Rotorpaketen, welche jeweils eine Mehrzahl von Blechpaketen und eine der Polpaaranordnung entsprechende Anzahl von Magneten umfasst; und
- eine Rotorwelle, auf welcher die Rotorpakete fixiert sind,
wobei die Rotorpakete einen Planschlag aufweisen, also eine Neigung der Ebene des jeweiligen Rotorpakets zu der eigenen zentralen Rotationsachse beziehungsweise zu der Rotationsachse der Rotorwelle.

Der Rotor ist vor allem dadurch gekennzeichnet, dass die Rotorpakete mit einer polgerechten Gleichrichtung ihres Planschlags unter Berücksichtigung der Polpaaranordnung auf der Rotorwelle positioniert sind.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Der Rotor ist konventionell in einer elektrische Antriebsmaschine (also einer PSM) einsetzbar, beispielsweise konventionell ausgeführt. Die Rotorwelle ist um ihre Rotationsachse rotierbar, wobei Toleranz-bedingt eine zu minimierende Unwucht, beispielsweise infolge einer Abweichung in der Konzentrizität, (Exzentrizität) zu der Rotationsachse vorliegt. In einer Ausführungsform ist die Rotorwelle einstückig ausgeführt und/oder umfasst ein oder mehrere Ritzel zum Abgeben ihres Drehmoments an ein Getriebe. Die Exzentrizität ist das Maß von dem geometrischen Zentrum des Außenumfangs (hier des die Rotorpakete aufnehmenden Wellensitzes) zu der tatsächlichen Rotationsachse, wobei in dem hier betrachteten Zusammenhang als Grundmaß die sich aus den Lagersitzen ergebende Rotationsachse angesetzt ist.

Ein jeweiliges Rotorpaket ist ein Blechpaket mit den entsprechend der erwünschten Polzahl beziehungsweise Polpaaranordnung eingesetzten Magneten. Das bedeutet nicht, dass jedes Rotorpaket einen eigenen Satz von Magneten umfassen muss. In einer Ausführungsform sind eine Mehrzahl von Blechpaketen mit gemeinsamen Magneten ausgestattet, also mit Magneten mit einer längeren axialen Ausdehnung als eines der Mehrzahl der Blechpakete. In einer vorteilhaften Ausführungsform sind die Blechpakete mit jeweils eigenen Magneten ausgestattet, sodass jedes Rotorpaket autark von einem anderen Rotorpaket ausgeführt ist.

Ein jedes Blechpaket ist aus einer Mehrzahl von (axial) gestapelten (bevorzugt konventionell ausgeführten) Rotorblechen zusammengesetzt. Jedes Rotorblech umfasst Einsatzaufnahmen für die Magnete und eine zentrale Wellenaufnahme. Ein Blechpaket weist diese Struktur mit einer größeren axialen Erstreckung auf. Die Blechpakete sind oftmals Zukaufteile. Ein solches Blechpaket weist eine Rotationsachse auf, welche im Idealfall nach der Montage auf der Rotorwelle mit deren Rotationsachse kongruent ist. In der Realität liegt auch hier eine Toleranzbedingte Abweichung vor, sowohl intern als auch resultierend aus der Montage-Toleranz.

Der Rotor umfasst eine Mehrzahl von Rotorpaketen, beispielsweise 3 [drei] bis 8 [acht], welche auf der Rotorwelle fixiert sind, beispielsweise mittels Presssitz.

Es wurde festgestellt, dass zumindest ein Großteil des oben genannten Effekts des thermisch verursachten Biegemoments auf die Rotorwelle von einem Planschlag der Blechpakete verursacht ist. Der Planschlag ist die Neigung der Ebene des Blechpakets beziehungsweise des Rotorpakets zu der (eigenen) zentralen Rotationsachse beziehungsweise zu der Rotationsachse der Rotorwelle. Wenn beispielsweise in einem Extremfall zwei Rotorpakete mit entgegengesetztem (also einander zugeneigten) Planschlag nebeneinander angeordnet sind, stoßen sie sich infolge ihrer Wärmausdehnung allein oder maßgeblich an der Seite der sich berührenden (Außen-) Kanten voneinander ab und wirken so mit ihrer radialen Ausdehnung hebelnd auf die Rotorwelle. Damit wird das Biegemoment induziert. Ein solche Planschlag beträgt beispielsweise bis zu 0,3 mm [drei Zehntel Millimeter] bei einem Scheibendurchmesser von 120 mm [einhundertundzwanzig Millimeter] bis 160 mm.

Hier ist nun vorgeschlagen, dass die Rotorpakete möglichst gleichgerichtet nach ihrem Planschlag montiert werden, also im Idealzustand derart positioniert und fixiert sind, dass die einzelnen Blechpakete parallel zueinander auf die Rotorwelle aufgebracht sind. Rotorpakete, welche mit einem gleichgerichteten Planschlag positioniert sind, weisen also eine gleichgerichtete Neigung um eine jeweilige (zueinander parallele) Achse in der Ebene, zu welcher die Rotationsachse normal ausgerichtet ist. Damit ist ein Hebeleffekt infolge einer Wärmedehnung vermieden. Aufgrund der Polpaaranordnung und der Folge, dass die Rotorpakete (mit möglichst geringer Winkel-Toleranz bezogen auf die Rotationsachse) jeweils gleich zueinander ausgerichtet sein müssen ist eine ideale Gleichrichtung des Planschlags beschränkt. Beispielsweise bei einer Anzahl von drei Polpaaren sind nur drei (um 120° zueinander verdrehte) Winkelorientierungen möglich. In einem Extremfall von zwei Rotorpaketen mit jeweils einem maximalen Planschlag, welche zueinander entgegengesetzt (also nicht gleichgerichtet) orientiert sind, lässt sich die Hebelwirkung infolge der Wärmeausdehnung mit einer relativen Winkeldrehung um 120° unter Annahme eines ideal ebenen Planschlags, also eines linearen Übergangs, um immerhin etwa 66 % reduzieren. Als gleichgerichtet wird abweichend von einer idealen Gleichrichtung der Planschläge zumindest eine polgerechte Gleichrichtung verstanden, also mit einem Pol-Abweichungswinkel von weniger als dem Bruch aus einem gesamten Umlauf [360°; Zähler] durch die Anzahl der Polpaare, also der Hälfte der Anzahl der (polwirksamen) Magnete. In obigem Beispiel also kleiner als 120°. Bevorzugt sind die Blechpakete beziehungsweise Rotorpakete derart vorausgewählt und sortiert, dass die polgerechte Gleichrichtung kleiner 60°, besonders bevorzugt kleiner 30° ist.

Es sei weiterhin darauf hingewiesen, dass mit einem solchen Rotor die zeitliche Dauer für eine in-line-Auslagerung verkürzbar ist oder sogar weggelassen werden kann. Damit wird eine erhebliche Zeiteinsparung in der Fertigung des Rotors erzielt.

Gemäß einem weiteren Aspekt wird ein Montageverfahren für einen Rotor nach einer Ausführungsform gemäß der obigen Beschreibung vorgeschlagen, aufweisend die folgenden Schritte:
**a.** Bereitstellen von den Blechpaketen;
**b.** Vermessen der Blechpakete;
**c.** Bereitstellen von den Magneten;
**d.** Verbinden jeweils eines der Blechpakete mit einer korrespondierenden Anzahl von den Magneten zu einem Rotorpaket mit einer entsprechenden Polpaaranordnung;
**e.** Bereitstellen der Rotorwelle;
**f.** zueinander Positionieren der Rotorwelle und der Rotorpakete; und
**g.** miteinander Fixieren der Rotorwelle und der Rotorpakete zu einem Rotor.
wobei in Schritt **f.** die Rotorpakete entsprechend ihres in Schritt **b.** ermittelten Planschlags unter Berücksichtigung der Polpaaranordnung gleichgerichtet auf der Rotorwelle positioniert werden.

Hiermit ist ein vorteilhaftes Montageverfahren für den Rotor gemäß der vorhergehenden Beschreibung aufgezeigt und es wird ohne Ausschluss der Allgemeinheit insoweit auf die dortige Beschreibung verwiesen. Es sei darauf hingewiesen, dass die Schritte, soweit sie nicht aufeinander aufbauen, in beliebiger Reihenfolge ausführbar sind. Beispielsweise sind Schritt **a.,** Schritt **c.** und Schritt **e.** unabhängig voneinander, nach Bedarf (beispielsweise in einem Kanban-System) oder gleichzeitig ausführbar. Schritt **b.** ist beispielsweise nach Schritt d. ausführbar. Die Schritte **a.** bis **c.** oder bis **d.** sind beispielsweise an einem separaten Ort, beispielsweise bei einem Zulieferer ausführbar, wobei die Vermessungsdaten bezogen auf das jeweilige Blechpaket oder Rotorpaket hinterlegt sind. Die Schritte **a.** bis **d.** werden so oft (für jeweils ein weiteres Rotorpaket) wiederholt, bis die gewünschte Anzahl von Rotorpaketen für den zu montierenden Rotor bereitgestellt sind. Schritt **f.** (und gegebenenfalls auch Schritt **g.**) wird entsprechend oft wiederholt oder die gewünschte Anzahl der Rotorpakete wird in einem Zug auf der Rotorwelle positioniert (und anschließend in Schritt **g.** fixiert).

Für das Ausführen von Schritt **f.** müssen die Schritte **a.** bis **c.** und Schritt **e.** vollendet sein, jedoch ist beispielsweise Schritt **d.** auch erst nach Schritt **g.** ausführbar. Bevorzugt wird Schritt **d.** vor Schritt **f.** ausgeführt, wobei besonders bevorzugt die Rotorpakete jeweils autark zueinander sind, also zueinander separate Magnete umfassen. Weiterhin sei darauf hingewiesen, dass Schritt **f.** und Schritt **g.** jeweils für ein Rotorpaket wiederholt ausgeführt werden. Beispielsweise bei einer Presssitz-Verbindung gehen Schritt **f.** und Schritt **g.** fließend ineinander über (beispielsweise bei einer Montage unter Ausnutzung der Wärmedehnung und entsprechender Temperaturführung). In einer Ausführungsform sind die Schritte **a.** bis **g.** in ein konventionelles Montageverfahren einbindbar oder sogar selbst jeweils konventionell ausführbar. Die Schritte werden in einer vorteilhaften Ausführungsform alle oder größtenteils (beispielsweise zumindest Schritte **a., c.** und **e.** und/oder Schritte **d.** und **f**.) unter Einsatz von automatisierten Transportmitteln und/oder Robotern ausgeführt.

Hier ist nun bei Schritt **f.** der Planschlag berücksichtigt, welcher in Schritt b. ermittelt worden ist. In einer Ausführungsform ist Schritt **b.** erst unmittelbar vor Schritt **f.** ausgeführt. In Schritt **f.** umfasst das Positionieren auch das Ausrichten der Rotorpakete gemäß ihrem Planschlag. In einer Ausführungsform ist dies nicht die einzige Toleranz, welche beim Positionieren in Schritt **f.** berücksichtigt wird. Wie oben erwähnt ist eine Gleichrichtung des Planschlags der Polpaaranordnung stets untergeordnet, also gegebenenfalls nur angenähert. In einer bevorzugten Ausführungsform ist die Gleichrichtung des Planschlags vorrangig vor anderen Maßnahmen zum Ausgleichen von Toleranzen, beispielsweise von solchen, welche Unwuchten verursachen.

Diesem Montageverfahren ist in einer Ausführungsform eine (bevorzugt verkürzte) in-line-Auslagerung nachgeschaltet. In einer Ausführungsform wird eine in-line-Auslagerung abhängig von dem erzielten Maß der Gleichrichtung der Planschläge der auf der Rotorwelle fixierten Rotorpakete ausgeführt. Die Entscheidung basiert beispielsweise auf Erfahrung.

Es wird weiterhin in einer vorteilhaften Ausführungsform des Montageverfahrens vorgeschlagen, dass vor Schritt **f.** eine Vielzahl von Blechpaketen und/oder Rotorpaketen nach ihrem jeweiligen Planschlag sortiert werden und in Schritt **f.** jeweils zueinander sortierte Rotorpakete auf der Rotorwelle positioniert werden.

Hier ist vorgeschlagen, dass ein Puffer-Lager mit Blechpaketen und/oder Rotorpaketen vorgehalten wird, in welchem diese derart sortiert sind, dass sie besonders gut angenähert zueinander gleichgerichtet auf der Rotorwelle montierbar sind. Dabei ist bevorzugt zudem die relative Exzentrizität der Rotorwelle zu den Rotorpaketen berücksichtigt, wobei hierbei eine Kompensation angestrebt wird. Die Maßgaben für die Sortierung ist die Umlaufwinkelorientierung des Planschlags, der Toleranzbetrag des Planschlags, und gegebenenfalls zusätzlich die Exzentrizität. Je nach Auffächerung der Vorkommnisse beziehungsweise Kombinationen von Toleranzen sind eine entsprechende Anzahl von Puffer-Lagern für jeweils einen Rotor beziehungsweise jeweils eine Rotorwelle vorzuhalten. Dabei ist abgesehen von einer längeren Anlaufphase im Montagebetrieb keine oder nur eine geringe zeitliche Verzögerung zu erwarten.

Es wird weiterhin in einer vorteilhaften Ausführungsform des Montageverfahrens vorgeschlagen, dass in Schritt f. die Rotorpakete auf der Rotorwelle entsprechend ihrer in Schritt b. ermittelten Exzentrizität,
und bevorzugt die Rotorpakete entsprechend ihres Planschlags,
orientiert und/oder in einer entsprechenden Reihenfolge positioniert werden.

Beispielsweise für eine Minimierung der dynamischen Unwucht werden Rotorpakete in einer solchen Reihenfolge platziert, dass Rotorpakete mit geringer Güte der Konzentrizität (also großer Exzentrizität) axial weit außen und mit besserer Güte axial mittig auf der Rotorwelle angeordnet sind. Damit sind die größten Unwucht-Verursacher nah bei oder unmittelbar angrenzend an eine (optionale) Wuchtscheibe angeordnet und damit der Verformungseinfluss auf die Rotorwelle und/oder angrenzende Rotorpakete reduziert. Ähnlich sind bevorzugt Rotorpakete mit größerem Toleranzbetrag des Planschlags weiter außen als Rotorpakete mit geringerem Toleranzbetrag angeordnet, sodass sich ein möglichst kompakter axialer Stapel auf der Rotorwelle ergibt.

In einer Ausführungsform ist nach der Exzentrizität und dem Planschlag ein Optimum der Orientierung, also der relativen Winkellage, um die Rotationsachse der Rotorwelle gebildet. Beispielsweise ist auf eine bessere Gleichrichtung der Planschläge verzichtet, um eine verbesserte Güte der Unwucht zu erzielen. Bevorzugt ist auf eine bessere Güte der Unwucht verzichtet, um eine verbesserte Gleichrichtung der Planschläge zu erzielen.

Es wird weiterhin in einer vorteilhaften Ausführungsform des Montageverfahrens vorgeschlagen, dass weiterhin in einem Schritt **h.** zumindest eine Wuchtscheibe auf der Rotorwelle positioniert wird und in einem Schritt **i.** gemäß einer gemessenen Unwucht bearbeitet wird.

Der hier vorgeschlagene Schritt **h.** wird vor, gleichzeitig mit oder nach Schritt **g.** ausgeführt. Die zumindest eine (bevorzugt endseitig abschließend zu den Rotorpaketen jeweils eine) Wuchtscheibe wird dann nachfolgend wie vorbekannt bearbeitet, beispielsweise iterativ, um die Unwuchten zu minimieren. In einer bevorzugten Ausführungsform wird vor dem Bearbeiten der zumindest einen Wuchtscheibe die Unwucht und/oder das Biegemoment infolge der Wärmeausdehnung der Rotorpakete aufgenommen und als Erfahrung bezogen auf die Orientierung und Reihenfolge der Rotorpakete sowie deren Güte registriert, beispielsweise in einem Computer gespeichert.

Es wird weiterhin in einer vorteilhaften Ausführungsform des Montageverfahrens vorgeschlagen, dass der Rotor vermessen wird und diese Vermessungsdaten des Rotors korreliert zu den Vermessungsdaten der auf der Rotorwelle fixierten Rotorpakete und der Rotorwelle, sowie deren relative Position in ein MachineLearning-Modell integriert werden.

Bei dieser Ausführungsform ist ein lernender Algorithmus (MachineLearning-Modell) integriert, bei welchem eine Vielzahl von Daten berücksichtigt und zur Verbesserung eines Regelungsergebnisses genutzt werden können. Ein solcher lernender Algorithmus (auch als DeepLearning-Algorithmus bezeichnet) ist bereits aus den Bereichen Spracherkennung beziehungsweise Sprachverarbeitung und Gesichtserkennung bekannt, welche sich dadurch kennzeichnen, dass sie auf von Menschen nicht ausreichend beherrschbaren Datenmengen und/oder auf nur unzureichend oder gar nicht bekannten Regeln basieren. Vergleichbar mit einem Finite-Elemente-Algorithmus ist ein solcher DeepLearning-Algorithmus im kleinsten trivial doch aufgrund der Komplexität (in diesem Fall vor allem der Menge an korrelierenden Vermessungsdaten) sind die Aufgaben für einen Menschen unlösbar oder nur unter einem unvertretbaren Zeitaufwand lösbar. Bekannte DeepLearning-Algorithmen beziehungsweise anwendbare Programmbibliotheken sind beispielsweise TensorFlow^{®}, Keras und Microsoft^{®} Cognitive Toolkit.

Nicht alle Effekte einer Unwuchtänderung über eine Laufzeit (also Lebensdauer oder nach frühzeitigem Austausch) oder eine in-line-Auslagerung sind durch die hier beschriebenen Exzentrizität und Planschläge hinreichend erklärbar. Weil ohnehin die Vermessung der Blechpakete beziehungsweise Rotorpakete vorgesehen ist (Schritt **b**.), ist hier vorgeschlagen, dass eine Modellbildung mittels maschinellem Lernen (MachineLearning-Modell) durchgeführt wird. Damit sind auch analytisch nicht oder schwer beschreibbare Effekte abbildbar. Dabei erfolgt zunächst eine Integration des analytisch beschreibbaren Domänenwissens in das MachineLearning-Modell.

Hier ist also vorgeschlagen, dass ein MachineLearning-Modell eingesetzt wird, um die Lösung der hier beschriebenen komplexen Aufgabe weiter zu verbessern. Besonders bevorzugt wird dieses Verfahren begleitend zu einer Montage in einer Montagelinie im Werk ausgeführt, wobei die Messergebnisse, beispielsweise einer Qualitätssicherung, in die Entscheidungen beim Auswählen und/oder Positionieren der Rotorpakete eines Rotors einfließen. Beispielsweise könnte eine als gerade als ausreichend hingenommene Auswahl und/oder Anordnung von Rotorpaketen ohne oder mit in-line-Auslagerung zu besseren Ergebnissen führen als eine für optimaler erachtete Auswahl und/oder Anordnung von Rotorpaketen eines anderen Rotors. Dann wird mittels des MachineLearning-Modells die Entscheidung entsprechend verändert. Bei dieser Ausführungsform des Montageverfahrens werden bevorzugt eine sehr große Anzahl von unterschiedlichen Messwerten aufgenommen, welche eine menschliche analytische Entscheidung aufgrund der daraus folgenden Komplexität nahezu verunmöglichen.

Es wird weiterhin in einer vorteilhaften Ausführungsform des Montageverfahrens vorgeschlagen, dass die Ergebnisse der Vermessung der Blechpakete in Schritt **b.** als maschinenlesbarer Code auf den Blechpaketen oder einer Halterung eines Transportmittels eingetragen und in einem Schritt **f.** für das Positionieren beziehungsweise eine Bestückung eines Puffer-Lagers ausgelesen werden. In einer Ausführungsform werden die Ergebnisse der Vermessung in einem entsprechenden Computer gespeichert, um daraus einen Erfahrungssatz beziehungsweise eine Datenquelle für das MachineLearning-Modell zu bilden.

Das MachineLearning-Modell setzt bevorzugt in der laufenden Fertigung an, sodass die Qualität ausgehend von einer analytischen Montage zu einer weiteren Qualitätssteigerung führt, ohne dass für aufwendige Versuchsreihen die Montage unterbrochen werden muss.

Gemäß einem weiteren Aspekt wird eine Antriebsmaschine für einen Antriebsstrang vorgeschlagen, aufweisend zumindest die folgenden Komponenten:
- einen Rotor nach einer Ausführungsform gemäß der obigen Beschreibung;
- einen zu dem Rotor korrespondierenden Stator; und
- eine Wellenlagerung für die Rotorwelle,
wobei bevorzugt der Rotor nach einem Montageverfahren nach einer Ausführungsform gemäß der obigen Beschreibung montiert ist.

Die elektrische Antriebsmaschine ist eine sogenannte permanent-erregte Synchronmaschine [PSM], welche als Drehmomentquelle (Motorbetrieb) und/oder als Energiequelle (Generatorbetrieb) einsetzbar ist. Der Rotor ist wie oben beschrieben ausgeführt. Der Stator funktioniert konventionell, sodass ein Drehmoment der elektrischen Antriebsmaschine konventionell erzeugbar und regelbar ist, und ist beispielsweise konventionell ausgeführt. Die Rotorwelle beziehungsweise der Rotor ist mittels einer Wellenlagerung gelagert, beispielsweise einem Festlager und einem Loslager, bevorzugt einem Wälzlager. Die Wellenlagerung ist in einem Motorgehäuse integriert oder zumindest teilweise in einem (integrierten) Getriebegehäuse angeordnet. In letzterem Falle wird die elektrische Antriebsmaschine beispielsweise erst in dem Getriebegehäuse montiert. Bevorzugt ist der Rotor nach einem Montageverfahren nach einer Ausführungsform gemäß der obigen Beschreibung montiert.

Der Rotor der elektrischen Antriebsmaschine ist besonders gut gewuchtet und es treten nur vernachlässigbare oder geringe Temperatur-bedingte Unwuchtänderungen auf. Damit ist eine große Laufruhe in allen Betriebszuständen und eine lange Lebensdauer erzielbar.

Gemäß einem weiteren Aspekt wird ein Kraftfahrzeug vorgeschlagen, aufweisend zumindest ein Vortriebsrad, eine Antriebsmaschine nach einer Ausführungsform gemäß der obigen Beschreibung zum Vortrieb des Kraftfahrzeugs über das zumindest eine Vortriebsrad und eine Traktionsbatterie zum Versorgen der elektrischen Antriebsmaschine mit einer elektrischen Leistungsspannung.

Hier ist nun vorgeschlagen, dass ein Kraftfahrzeug eine solche Antriebsmaschine umfasst, wobei die benötigte elektrische Leistungsspannung für den Vortrieb des Kraftfahrzeugs mittels einer Traktionsbatterie zur Verfügung gestellt wird. Dabei ist die Traktionsbatterie mit der Antriebsmaschine elektrisch verbunden und versorgt die Antriebsmaschine je nach Vortriebsbedarf beispielsweise je nach Stellung des sogenannten Gaspedals mit einer entsprechend benötigten elektrische Leistungsspannung. Über die Rotorwelle ist das (in der elektrischen Antriebsmaschine erzeugte) Drehmoment an (bevorzugt über ein Übersetzungsgetriebe und/oder ein Differential) an das zumindest eine Vortriebsrad übertragbar. Die Vortriebsräder übertragen das Drehmoment auf den Untergrund und treiben das Kraftfahrzeug somit voran.

Der Rotor der elektrischen Antriebsmaschine ist besonders gut gewuchtet und es treten nur vernachlässigbare oder geringe Temperatur-bedingte Unwuchtänderungen auf. Damit ist eine große Laufruhe in allen Betriebszuständen und eine lange Lebensdauer erzielbar. Zudem steigt damit die Leistungseffizienz des Vortriebs.

Gemäß einem weiteren Aspekt wird ein Computerprogramm vorgeschlagen, umfassend
einen Computerprogrammcode, wobei der Computerprogrammcode auf zumindest einem Computer derart ausführbar ist, dass der zumindest eine Computer dazu veranlasst ist, das Montageverfahren nach einer Ausführungsform gemäß der obigen Beschreibung auszuführen, wobei zumindest einer der Computer:
- in einem Edge-Device einer Montagestation, bevorzugt als Montagecomputer oder eine Komponente eines Montagecomputers, integriert ist; und/oder
- zur Kommunikation mit einer Cloud, auf welcher bevorzugt der Computerprogrammcode bereitgestellt ist, eingerichtet ist.

Es sei darauf hingewiesen, dass das Montageverfahren physisch von einer oder einer Mehrzahl von Montagestationen ausgeführt wird und das Computerprogramm lediglich die eingesetzten Mittel befehligt und unter Umständen die beteiligen Menschen entsprechend anweist. Das Computerprogramm ist eine übergeordnete oder spezialisierte Ergänzung zu Unterprogrammen, welche (beispielsweise auf Ebene des Maschinen-Codes) die eigentlichen ausführbaren Befehle (beispielsweise eine Bewegung eines Roboterarms) beziehungsweise die Ausgaben auf einer Mensch-Maschine-Schnittstelle (beispielsweise einem Bildschirm) ausgeben. Bevorzugt sind die Unterprogramme konventionell ausgeführt beziehungsweise zur konventionellen Ausführung durch die und/oder Bedienung von den entsprechenden automatisierten Mitteln eingerichtet.

Ein Computer umfasst einen oder mehrere Prozessoren, beispielsweise einen Allzweck-Prozessor (CPU) oder Mikroprozessor, RISC-Prozessor, GPU und/oder DSP. Der Computer weist beispielsweise zusätzliche Elemente wie Speicherschnittstellen auf. Wahlweise oder zusätzlich bezeichnen die Begriffe solch eine Vorrichtung, welche in der Lage ist, ein bereitgestelltes oder eingebundenes Programm, bevorzugt mit standardisierter Programmiersprache, wie beispielsweise C++, JavaScript oder Python, auszuführen und/oder Datenspeichergeräte und/oder andere Geräte wie Eingangsschnittstellen und Ausgangsschnittstellen zu steuern und/oder darauf zuzugreifen. Der Begriff Computer bezeichnet auch eine Vielzahl von Prozessoren oder eine Vielzahl von (Unter-) Computern, welche miteinander verbunden und/oder anderweitig kommunizierend verbunden sind und möglicherweise eine oder mehrere andere Ressourcen, wie zum Beispiel einen Speicher, gemeinsam nutzen.

Ein (Daten-) Speicher ist beispielsweise eine Festplatte (HDD, SSD, HHD) oder ein (nichtflüchtiger) Festkörperspeicher, beispielsweise ein ROM-Speicher oder Flash-Speicher [Flash-EEPROM). Der Speicher umfasst oftmals eine Mehrzahl einzelner physischer Einheiten oder ist auf eine Vielzahl von separaten Geräten verteilt, sodass ein Zugriff darauf über (Daten-) Kommunikation, beispielsweise Package-Data-Service, stattfindet. Letzteres ist eine dezentrale Lösung, wobei Speicher und Prozessoren einer Vielzahl separater Recheneinheiten anstelle eines (einzigen baueinheitlichen) zentralen Bordcomputers oder ergänzend zu einem zentralen Bordcomputer genutzt werden.

Gemäß einem weiteren Aspekt wird ein Computerprogrammprodukt vorgeschlagen, auf welchem ein Computerprogrammcode abgespeichert ist, wobei der Computerprogrammcode auf zumindest einem Computer derart ausführbar ist, dass der zumindest eine Computer dazu veranlasst ist, das Montageverfahren nach einer Ausführungsform gemäß der obigen Beschreibung auszuführen, wobei zumindest einer der Computer:
- in einem Edge-Device einer Montagestation, bevorzugt als Montagecomputer oder eine Komponente eines Montagecomputers, integriert ist; und/oder
- zur Kommunikation mit einer Cloud, auf welcher bevorzugt der Computerprogrammcode bereitgestellt ist, eingerichtet ist.

Ein Computerprogrammprodukt, aufweisend Computerprogrammcode, ist beispielsweise ein Medium wie beispielsweise RAM, ROM, eine SD-Karte, eine Speicherkarte, eine Flash-Speicherkarte oder eine Disc. Alternativ ist ein Computerprogrammprodukt auf einem Server abgespeichert und herunterladbar. Sobald das Computerprogramm über eine Ausleseeinheit (beispielsweise ein Laufwerk und/oder eine Installation) auslesbar gemacht ist, so ist der enthaltende Computerprogrammcode und das darin enthaltene Verfahren durch einen Computer beziehungsweise in Kommunikation mit einer Mehrzahl von computergestützten Vorrichtungen, beispielsweise gemäß obiger Beschreibung, ausführbar.

Ein Edge-Device entspricht einem lokalen Server, welcher an einer Montagestation, einer Montagelinie oder an einem Fertigungsort angeordnet ist und unter möglichst geringem Abstand und möglichst ohne anderen (störenden) Datenverkehr spezialisiert bereitgestellt ist. Darin sind alle notwendigen Komponenten eines Computers enthalten und bevorzugt ist das Edge-Device von der übrigen Datenverarbeitung physisch getrennt und allein für die Aufgaben des MachineLearning-Modells eingerichtet.

Eine Cloud entspricht in ihren Aufgaben dem Edge-Device, ist aber im Gegensatz dazu ein entfernter oder zumindest vielseitig genutzter Server beziehungsweise eine Ansammlung von Computern. Hier stehen unter Umständen größere Rechenkapazitäten zur Verfügung als bei einem Edge-Device und/oder es sind damit geringere Initialkosten verbunden. Nachteile sind aber oftmals ein Datenstau aufgrund der vielseitigen Anfragen, sowie die Datensicherheit.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: ein Rotor in einer perspektivischen Ansicht;
- Fig. 2:: ein konventioneller Rotor mit einer Rotorwelle mit zwei Rotorpaketen in einer schematischen Schnittansicht;
- Fig. 3:: der konventionelle Rotor gemäß Fig. 2 in einem erwärmten Zustand;
- Fig. 4:: ein Rotor mit einer Rotorwelle mit zwei gleichgerichteten Rotorpaketen in einer schematischen Schnittansicht;
- Fig. 5:: ein Montageverfahren in einem Schaubild;
- Fig. 6:: ein Rotorpaket in einer schematischen Vorderansicht; und
- Fig. 7:: ein Kraftfahrzeug mit elektrischen Antriebsmaschinen in einer Draufsicht.

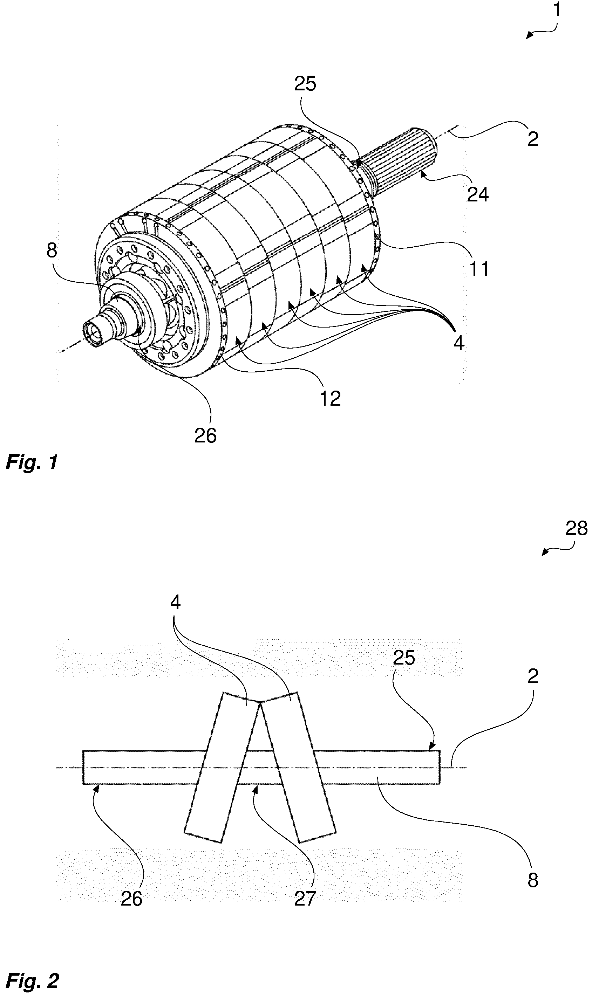

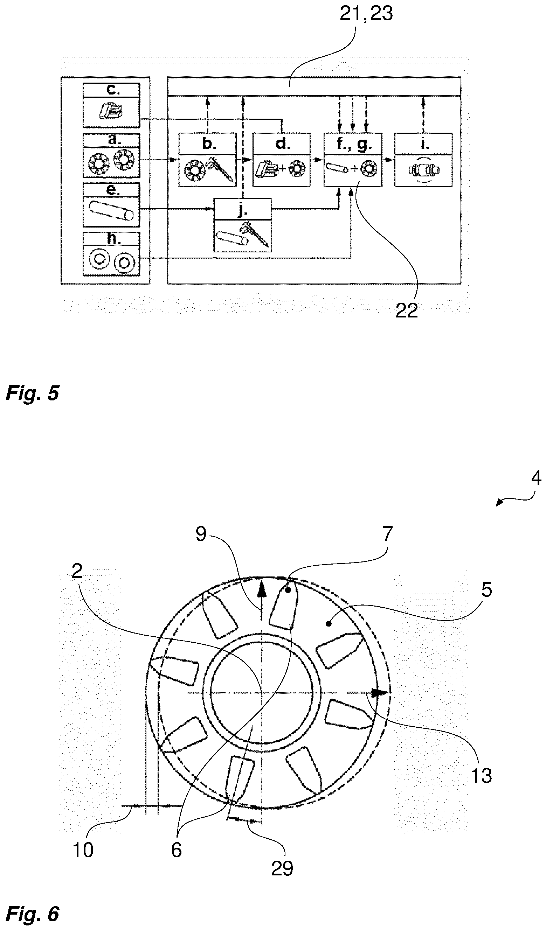

In Fig. 1 ist ein Rotor **1** in einer perspektivischen Ansicht gezeigt. Dabei ist der Rotor **1** um eine zentrale Rotationsachse **2** rotierbar und weist eine Rotorwelle **8** (hier mit einem endseitigen Ritzel **24**) mit einem ersten Lagersitz **25** und einem zweiten Lagersitz **26** auf. Zwischen den Lagersitzen **25,26** umfasst der Rotor **1** hier (rein optional sechs) Rotorpakete **4** auf einem Wellensitz **27** (vergleiche Fig. 2 bis Fig. 4). Jeweils endseitig sind Wuchtscheiben **11,12** auf der Rotorwelle **8** vorgesehen, also eine erste Wuchtscheibe **11** ritzelseitig der Rotorpakete **4** und eine zweite Wuchtscheibe **12** darstellungsgemäß diesseits der Rotorpakete **4.** Jedes Rotorpaket **4** umfasst ein Blechpaket **5** und eine der gewünschten Polpaaranordnung **6** entsprechende Anzahl von Magneten **7** (vergleiche beispielsweise Fig. 6). Beispielsweise weist der Rotor **1** die Abmessungen und/oder die Funktion eines konventionellen Rotors **28** auf.

In Fig. 2 ist ein konventioneller Rotor **28** mit einer Rotorwelle **8** mit zwei endseitigen Lagersitzen **25,26** und zwei Rotorpaketen **4** auf dem axial zentralen Wellensitz **27** in einer schematischen Schnittansicht gezeigt. Beispielsweise sind sowohl die Rotorwelle **8** als auch die zwei Rotorpakete **4** konventionell ausgeführt. Der Planschlag **9** ist also die Neigung der Ebene des Rotorpakets **4** zu der (eigenen oder derjenigen der Rotorwelle **8**) Rotationsachse **2,** welche hier für das einfachere Verständnis übertrieben dargestellt ist. Ebenfalls allein für die Vereinfachung ist die Rotationsachse **2** exakt zentral in der Rotorwelle **8** dargestellt. Auf der Rotorwelle **8** sind hier beispielsweise zwei Rotorpakete **4** derart positioniert, dass sie mit einem einander entgegengesetzt ausgerichteten Planschlag **9** aneinander liegen. Die Rotorpakete **4** sind also zueinander hingeneigt.

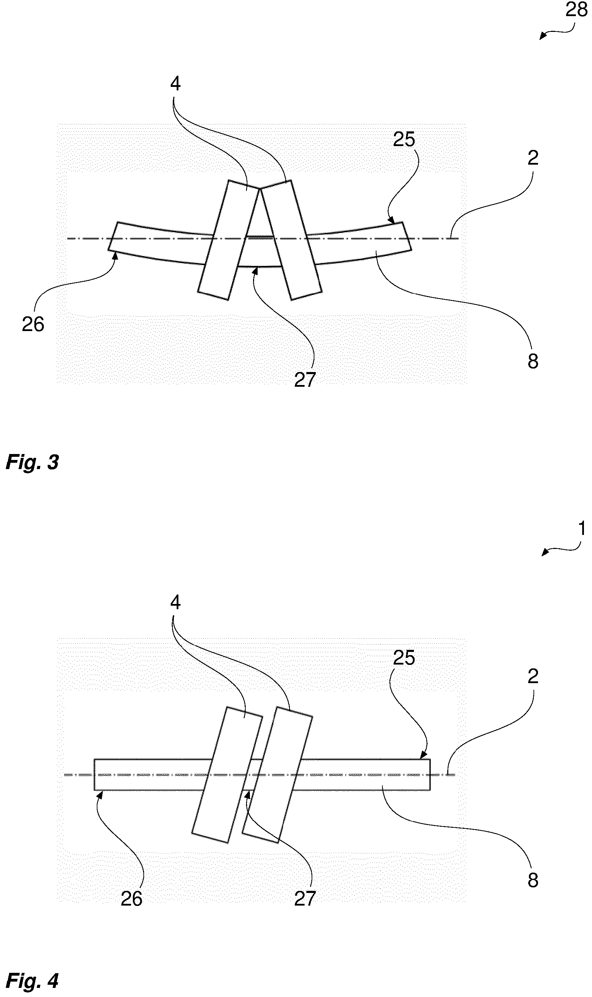

In Fig. 3 ist der konventionelle Rotor **28** gemäß Fig. 2 in einem erwärmten Zustand dargestellt. In dem hier dargestellten erwärmten Zustand (beispielsweise bei Betriebstemperaturen im Bereich von 120 °C bis 160 °C) dehnen sich die Rotorpakete **4** aus. Die thermische Ausdehnung der Rotorpakete **4** hat in Kombination mit dem entgegengesetzt ausgerichteten Planschlag **9** der Rotorpakete **4** ein Biegemoment (um die Achse senkrecht zu der Bildebene) auf die Rotorwelle **8** zur Folge. Das Biegemoment der Blechpakete **5** induziert somit eine Unwucht **13** des Rotors **1** um die Rotationsachse **2.** Für das einfachere Verständnis übertrieben dargestellt ist die Unwucht **13** des Rotors **1** um die Rotationsachse **2** gezeigt. Diese ist reversibel, also mit der Temperaturabnahme und des Rückgangs der Wärmedehnung der Rotorpakete **4** wieder ausgeglichen oder es verbleibt eine plastische Verformung der Rotorwelle **8** und/oder zumindest eines der Rotorpakete **4.**

In Fig. 4 ist ein Rotor **1** mit einer Rotorwelle **8** mit zwei gleichgerichteten Rotorpaketen **4** in einer schematischen Schnittansicht gezeigt. Der Rotor **1** ist ohne Ausschluss der Allgemeinheit rein der Übersichtlichkeit halber weitestgehend mit der in Fig. 2 gezeigten Ausführungsform identisch, sodass insoweit auf die dortige Beschreibung verwiesen wird. In dieser Ausführungsform sind die Rotorpakete **4** mit einem (rein optional betragsgleichen und) gleichgerichteten Planschlag **9** derart auf der Rotorwelle **8** positioniert, dass bei einer thermischen Ausdehnung der zwei Rotorpakete **4** (zumindest aus den Planschlägen **9** resultierend) kein Biegemoment auf die Rotorwelle **8** einwirkt. Mittels der Gleichrichtung des Planschlags **9** der Blechpakete **5** ergibt sich somit keine bis eine sehr geringe Unwuchtänderung des Rotors **1.**

In Fig. 5 ist ein Montageverfahren in einem Schaubild dargestellt. Für den hierin beschriebenen Rotor **1** und seine Komponenten wird rein beispielhaft auf die Fig. 1 verwiesen. In einem ersten Schritt **a.** werden Blechpakete **5** bereitgestellt. In einem Schritt **b.** werden die Blechpakete **5** bezüglich ihres Planschlags **9** und bevorzugt der Exzentrizität **10** vermessen. Dabei werden optional die (ersten) Vermessungsdaten für eine spätere Korrelation gespeichert. Hier rein optional in einem anschließenden Schritt **c.** werden die Magnete **7** bereitgestellt. In einem Schritt **d.** wird jeweils eines der Blechpakete **5** und eine korrespondierende Anzahl von Magneten **7** zu einem Rotorpaket **4** (beispielsweise mittels Verkleben dauerhaft lose) verbunden. Es sei darauf hingewiesen, dass die Magnete **7** entsprechend ihrer Pole ausgerichtet in einer Polpaaranordnung **6** innerhalb des Blechpakets **5** positioniert werden.

In weiteren Schritt **e.** wird eine Rotorwelle **8** bereitgestellt und in einem Schritt **j.** zumindest auf ihre Konzentrizität vermessen. Die Rotorwelle **8** ist zur Aufnahme einer Mehrzahl von Rotorpaketen **4** und von zumindest einer Wuchtscheibe **11,12** eingerichtet. In einer Montagestation **22** werden in einem anschließenden Schritt **f.** die Rotorwelle **8** und die Rotorpakete **4** (auf Basis der ersten Vermessungsdaten aus Schritt **b.**) zueinander positioniert. Anschließend in Schritt **g.** werden die Rotorpakete **4** auf der Rotorwelle **8** fixiert, beispielsweise mittels Aufschrumpfen. Hier rein optional gleichzeitig mit Schritt **f.** und Schritt **g.** werden in einem Schritt **h.** (beispielsweise zwei) Wuchtscheiben **11,12** auf die Rotorwelle **8** positioniert und fixiert. Diese Wuchtscheiben **11,12** werden in einem nachfolgenden Schritt **i.** gemäß der gemessenen Unwucht **13** (beispielsweise iterativ) bearbeitet. Optional werden zumindest die initialen (bevorzugt alle) Messungen als (zweite) Vermessungsdaten gespeichert. Optional umfasst der Schritt **i.** weiterhin eine in-line-Auslagerung.

Die in Schritt **i.** ermittelten Vermessungsdaten des Rotors **1** werden zusammen mit den Vermessungsdaten der auf der Rotorwelle **8** fixierten Rotorpakete **4** und der Rotorwelle **8** selbst, sowie die relative Position der Rotorpakete **4** korreliert. Die korrelierten Vermessungsdaten werden optional in einem Edge-Device **21** oder in einer Cloud **23** gespeichert und/oder verarbeitet, und zwar in einem MachineLearning-Modell derart integriert, dass eine stetige Verbesserung bei der Sortierung und/oder Orientierung der Rotorpakete **4** als Ziel des MachineLearning-Modells gesetzt wird.

In Fig. 6 ist ein Rotorpaket **4** in einer schematischen Vorderansicht gezeigt. Dabei umfasst das Rotorpaket **4** ein Blechpaket **5** mit einer Mehrzahl von Magneten **7** (hier sechs), welche in einer 120°-Polpaaranordnung **6** innerhalb des Blechpakets **5** eingebracht sind. Im Zentrum ist die Rotationsachse **2** dargestellt. Dabei weist, fertigungsbedingt, das Blechpaket **5** (und damit das Rotorpaket **4**) eine Abweichung der Konzentrizität (Exzentrizität **10**) von der Rotationsachse **2** auf, welche in einer Unwucht **13** führt. Zudem weisen die Blechpakete **5** einen Planschlag **9,** also die Neigung der Ebene des Blechpakets **5** zu der (eigenen) Rotationsachse **2** beziehungsweise zu der Rotationsachse **2** der Rotorwelle **8** auf (vergleiche Fig. 4). Die Winkellage des Planschlags **9** ist mittels eines Pol-Abweichungswinkels **29** bestimmt. Dieser stellt eine nicht ausgleichbare Abweichung in der Gleichrichtung des Planschlags **9** dar, unter der Annahme, dass der Planschlag **9** des anderen Rotorpakets **4** einen Pol-Abweichungswinkel **29** von null aufweist.

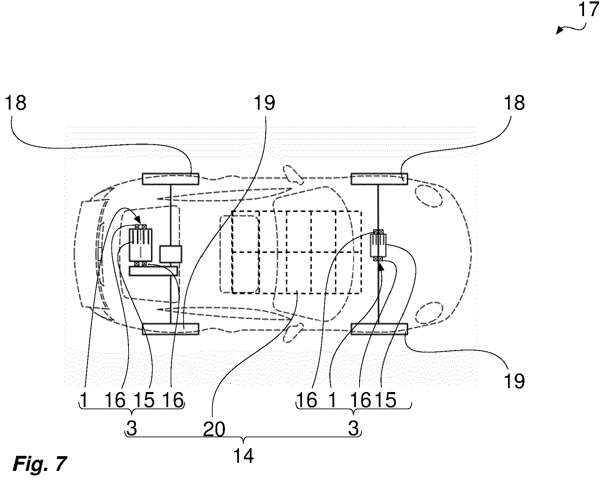

In Fig. 7 ist ein Kraftfahrzeug **17** mit einer elektrischen Antriebsmaschine **3** in einer rein schematischen Draufsicht gezeigt. Der Antriebsstrang **14** weist (rein optional zwei) Antriebsmaschinen **3** auf, von denen beispielsweise eine als Heckantrieb und eine zweite als Frontantrieb eingerichtet ist. Die Antriebsmaschinen **3** sind jeweils mit einem linken Vortriebsrad **18** und einem rechten Vortriebsrad **19** einer gemeinsamen Radachse drehmomentübertragend verbunden sind. Beispielsweise ist somit der Antriebsstrang **14** des Kraftfahrzeugs **17** im Allradantrieb oder einzig mittels Heckantrieb oder Frontantrieb betreibbar. Beide Antriebsmaschinen **3** umfassen einen, zur Rotation innerhalb eines entsprechenden Stators **15,** eingerichteten Rotor **1.** Dabei ist der Rotor **1** auf einer Wellenlagerung **16** gelagert. Für die Spannungsversorgung der (elektrischen) Antriebsmaschinen **3** ist eine Traktionsbatterie **20** vorgesehen, welche beispielsweise im Boden des Kraftfahrzeugs **17** angeordnet ist. Bevorzugt ist zumindest eine der elektrischen Antriebsmaschinen **3** allein oder zusätzlich zur Rekuperation von Entschleunigungsenergie (Bremsen) und damit zum Laden der Traktionsbatterie **20** eingerichtet.

Mit dem hier vorgeschlagenen Rotor ist eine thermisch bedingte Unwuchtänderung deutlich reduzierbar.

## Patentansprüche

1. Rotor (1) mit einer Rotationsachse (2) für eine elektrische Antriebsmaschine (3), aufweisend zumindest die folgenden Komponenten:
- eine Mehrzahl von Rotorpaketen (4), welche jeweils eine Mehrzahl von Blechpaketen (5) und eine der Polpaaranordnung (6) entsprechende Anzahl von Magneten (7) umfasst; und
- eine Rotorwelle (8), auf welcher die Rotorpakete (4) fixiert sind,
wobei die Rotorpakete (4) einen Planschlag (9) aufweisen, also eine Neigung der Ebene des jeweiligen Rotorpakets (5) zu der eigenen zentralen Rotationsachse beziehungsweise zu der Rotationsachse der Rotorwelle (2), **dadurch gekennzeichnet, dass**
die Rotorpakete (4) mit einer polgerechten Gleichrichtung ihres Planschlags (9) unter Berücksichtigung der Polpaaranordnung (6) auf der Rotorwelle (8) positioniert sind.

2. Montageverfahren für einen Rotor (1) nach Anspruch 1, aufweisend die folgenden Schritte:
**a.** Bereitstellen von den Blechpaketen (5);
**b.** Vermessen der Blechpakete (5);
**c.** Bereitstellen von den Magneten (7);
**d.** Verbinden jeweils eines der Blechpakete (5) mit einer korrespondierenden Anzahl von den Magneten (7) zu einem Rotorpaket (4) mit einer entsprechenden Polpaaranordnung (6);
**e.** Bereitstellen der Rotorwelle (8);
**f.** zueinander Positionieren der Rotorwelle (8) und der Rotorpakete (4); und
**g.** miteinander Fixieren der Rotorwelle (8) und der Rotorpakete (4) zu einem Rotor (1).
wobei in Schritt **f.** die Rotorpakete (4) entsprechend ihres in Schritt **b.** ermittelten Planschlags (9) unter Berücksichtigung der Polpaaranordnung (6) gleichgerichtet auf der Rotorwelle (8) positioniert werden.

3. Montageverfahren nach Anspruch 2, wobei
vor Schritt **f.** eine Vielzahl von Blechpaketen (5) und/oder Rotorpaketen (4) nach ihrem jeweiligen Planschlag (9) sortiert werden und in Schritt **f.** jeweils zueinander sortierte Rotorpakete (4) auf der Rotorwelle (8) positioniert werden.

4. Montageverfahren nach Anspruch 2 oder Anspruch 3, wobei
in Schritt **f.** die Rotorpakete (4) auf der Rotorwelle (8) entsprechend ihrer in Schritt **b.** ermittelten Exzentrizität (10).

5. Montageverfahren nach Anspruch 4, wobei
die Rotorpakete (4) entsprechend ihres Planschlags (9),
orientiert und/oder in einer entsprechenden Reihenfolge positioniert werden.

6. Montageverfahren nach einem von Anspruch 2 bis Anspruch 5, wobei weiterhin in einem Schritt **h.** zumindest eine Wuchtscheibe (11,12) auf der Rotorwelle (8) positioniert wird und in einem Schritt **i.** gemäß einer gemessenen Unwucht (13) bearbeitet wird.

7. Montageverfahren nach einem von Anspruch 2 bis Anspruch 6, wobei
der Rotor (1) vermessen wird und diese Vermessungsdaten des Rotors (1) korreliert zu den Vermessungsdaten der auf der Rotorwelle (8) fixierten Rotorpakete (4) und der Rotorwelle (8), sowie deren relative Position in ein MachineLearning-Modell integriert werden.

8. Antriebsmaschine (3) für einen Antriebsstrang (14), aufweisend zumindest die folgenden Komponenten:
- einen Rotor (1) nach Anspruch 1;
- einen zu dem Rotor (1) korrespondierenden Stator (15); und
- eine Wellenlagerung.(16) für die Rotorwelle (8).

9. Antriebsmaschine (3) nach Anspruch 8,
wobei der Rotor (1) nach einem Montageverfahren nach einem von Anspruch 2 bis Anspruch 7 montiert ist.

10. Kraftfahrzeug (17), aufweisend zumindest ein Vortriebsrad (18,19), eine Antriebsmaschine (3) nach Anspruch 8 oder Anspruch 9 zum Vortrieb des Kraftfahrzeugs (17) über das zumindest eine Vortriebsrad (18,19) und eine Traktionsbatterie (20) zum Versorgen der elektrischen Antriebsmaschine (3) mit einer elektrischen Leistungsspannung.

11. Computerprogramm, umfassend
einen Computerprogrammcode, wobei der Computerprogrammcode auf zumindest einem Computer derart ausführbar ist, dass der zumindest eine Computer dazu veranlasst ist, das Montageverfahren nach einem von Anspruch 2 bis Anspruch 7 auszuführen, wobei zumindest einer der Computer:
- in einem Edge-Device (21) einer Montagestation (22), bevorzugt als Montagecomputer oder eine Komponente eines Montagecomputers, integriert ist; und/oder
- zur Kommunikation mit einer Cloud (23), auf welcher bevorzugt der Computerprogrammcode bereitgestellt ist, eingerichtet ist.

12. Computerprogrammprodukt, auf welchem ein Computerprogrammcode abgespeichert ist, wobei der Computerprogrammcode auf zumindest einem Computer derart ausführbar ist, dass der zumindest eine Computer dazu veranlasst ist, das Montageverfahren nach einem von Anspruch 2 bis Anspruch 7 auszuführen, wobei zumindest einer der Computer:
- in einem Edge-Device (21) einer Montagestation (22), bevorzugt als Montagecomputer oder eine Komponente eines Montagecomputers, integriert ist; und/oder
- zur Kommunikation mit einer Cloud (23), auf welcher bevorzugt der Computerprogrammcode bereitgestellt ist, eingerichtet ist.

## Claims

1. A rotor (1) having an axis of rotation (2) for an electric drive motor (3), comprising at least the following components:
- a plurality of rotor packages (4), each comprising a plurality of sheet packages (5) and a number of magnets (7) corresponding to the pole pair arrangement (6); and
- a rotor shaft (8) on which the rotor packages (4) are fixed, wherein the rotor packages (4) have a run-out (9), i.e. an inclination of the plane of the respective rotor package (5) to its own central axis of the rotation or to the axis of rotation of the rotor shaft (2), **characterised in that**
the rotor packages (4) are positioned on the rotor shaft (8) with a pole-correct rectification of their run-out (9), taking into account the pole pair arrangement (6).

2. An assembly method for a rotor (1) according to claim 1, comprising the steps of:
**a.** providing the sheet packages (5);
**b.** measuring the sheet packages (5);
**c.**providing the magnets (7);
**d.** connecting one of the sheet packages (5) to a corresponding number of the magnets (7) to form a rotor package (4) with a corresponding pole pair arrangement (6);
**e.** providing the rotor shaft (8);
**f.** positioning the rotor shaft (8) and the rotor packages (4) relative to each other; and
**g.**fixing the rotor shaft (8) and the rotor packages (4) together to form a rotor (1),
wherein in step **f.,** the rotor packages (4) are positioned in the same direction on the rotor shaft (8) according to their run-out (9) determined in step b., taking into account the pole pair arrangement (6).

3. The assembly method according to claim 2, wherein
before step **f.,** a plurality of sheet packages (5) and/or rotor packages (4) are sorted according to their respective run-out (9), and in step f., rotor packages (4) sorted in relation to each other are positioned on the rotor shaft (8).

4. The assembly method according to claim 2 or claim 3, wherein in step **f.,** the rotor packages (4) are on the rotor shaft (8) corresponding to their eccentricity (10) determined in step **b.**

5. The assembly method according to claim 4, wherein the rotor packages (4) are orientated according to their run-out (9), and/or positioned in a corresponding order.

6. The assembly method according to any one of claims 2 to 5, wherein further in a step h., at least one balancing disc (11, 12) is positioned on the rotor shaft (8), and in a step i. is machined according to a measured imbalance (13).

7. The assembly method according to any one of claims 2 to 6, wherein the rotor (1) is measured and this measurement data of the rotor (1) is correlated with the measurement data of the rotor packages (4) fixed on the rotor shaft (8) and the rotor shaft (8), and their relative position is integrated into a machine learning model.

8. A drive motor (3) for a drive train (14) comprising at least the following components:
- a rotor (1) according to claim 1;
- a stator (15) corresponding to the rotor (1); and
- a shaft bearing (16) for the rotor shaft (8).

9. The drive motor (3) according to claim 8, wherein the rotor (1) is mounted according to an assembly method according to any one of claims 2 to 7.

10. A motor vehicle (17) comprising at least one drive wheel (18, 19), a drive motor (3) according to claim 8 or 9 for driving the motor vehicle (17) via the at least one drive wheel (18, 19) and a traction battery (20) for supplying an electrical power voltage to the electric drive motor (3).

11. A computer programme comprising
a computer programme code, wherein the computer programme code is executable on at least one computer, such that the at least one computer is caused to perform the assembly method of any of claims 2 to 7, wherein at least one of the computers is: - integrated in an edge device (21) of an assembly station (22), preferably as an assembly computer or a component of an assembly computer; and/or
- is configured to communicate with a cloud (23) on which preferably the computer programme code is provided.

12. A computer programme product on which a computer programme code is stored, the computer programme code being executable on at least one computer such that the at least one computer is caused to perform the assembly method according to any one of claims 2 to 7, wherein at least one of the computers is:
- integrated in an edge device (21) of an assembly station (22), preferably as an assembly computer or a component of an assembly computer; and/or
- configured to communicate with a cloud (23), on which preferably the computer programme code is provided.

## Revendications

1. Rotor (1) avec un axe de rotation (2) pour un moteur d'entraînement électrique (3), comprenant au moins les composants suivants :
- une pluralité d'ensembles de rotors (4), chacun comprenant une pluralité d'ensembles de feuilles (5) et un nombre d'aimants (7) correspondant à l'agencement de paire de pôles (6) ; et
- un arbre de rotors (8) sur lequel les ensembles de rotors (4) sont fixés, dans lequel les ensembles de rotors (4) présentent un faux-rond (9), c'est-à-dire une inclinaison du plan de l'ensemble de rotors (5) respectif par rapport à son propre axe central de rotation ou par rapport à l'axe de rotation de l'arbre de rotors (2), **caractérisé en ce que**
les ensembles de rotors (4) sont positionnés sur l'arbre de rotors (8) avec un redressement correct des pôles de leur faux-rond (9), en tenant compte de l'agencement de paires de pôles (6).

2. Procédé d'assemblage pour un rotor (1) selon la revendication 1, comprenant les étapes suivantes :
**a.**la fourniture des ensembles de feuilles (5) ;
**b**.la mesure des ensembles de feuilles (5) ;
**c**.la fourniture des aimants (7) ;
**d**.la connexion d'un des ensembles de feuilles (5) à un nombre correspondant d'aimants (7) pour former un ensemble de rotors (4) avec un agencement de paire de pôles (6) correspondant ;
**e**.la fourniture de l'arbre de rotors (8) ;
**f**. le positionnement de l'arbre de rotors (8) et des ensembles de rotors (4) l'un par rapport à l'autre ; et
**g.** la fixation de l'arbre de rotors (8) et des ensembles de rotors (4) ensemble pour former un rotor (1),
dans lequel à l'étape **f.,** les ensembles de rotors (4) sont positionnés dans la même direction sur l'arbre de rotors (8) selon leur faux-rond (9) déterminé à l'étape b., en tenant compte de l'agencement de paire de pôles (6).

3. Procédé d'assemblage selon la revendication 2, dans lequel
avant l'étape **f.,** une pluralité d'ensembles de feuilles (5) et/ou d'ensembles de rotors (4) sont triés en fonction de leur faux-rond (9) respectif, et à l'étape f., des ensembles de rotors (4) triés les uns par rapport aux autres sont positionnés sur l'arbre de rotors (8).

4. Procédé d'assemblage selon la revendication 2 ou la revendication 3, dans lequel, à l'étape **f.,** les ensembles de rotors (4) sont sur l'arbre de rotors (8) correspondant à leur excentricité (10) déterminée à l'étape **b.**

5. Procédé d'assemblage selon la revendication 4, dans lequel les ensembles de rotors (4) sont orientés selon leur faux-rond (9), et/ou positionnés dans un ordre correspondant.

6. Procédé d'assemblage selon l'une quelconque des revendications 2 à 5, dans lequel, en outre, dans une étape h., au moins un disque d'équilibrage (11, 12) est positionné sur l'arbre de rotors (8), et dans une étape i. est usiné selon un déséquilibre mesuré (13).

7. Procédé d'assemblage selon l'une quelconque des revendications 2 à 6, dans lequel le rotor (1) est mesuré et ces données de mesure du rotor (1) sont corrélées avec les données de mesure des ensembles de rotors (4) fixés sur l'arbre de rotors (8) et de l'arbre de rotors (8), et leur position relative est intégrée dans un modèle d'apprentissage machine.

8. Moteur d'entraînement (3) pour une chaîne cinématique (14) comprenant au moins les composants suivants :
- un rotor (1) selon la revendication 1 ;
- un stator (15) correspondant au rotor (1) ; et
- un palier d'arbre (16) pour l'arbre de rotors (8).

9. Moteur d'entraînement (3) selon la revendication 8, dans lequel le rotor (1) est monté selon un procédé d'assemblage selon l'une quelconque des revendications 2 à 7.

10. Véhicule à moteur (17) comprenant au moins une roue motrice (18, 19), un moteur d'entraînement (3) selon la revendication 8 ou 9 pour entraîner le véhicule à moteur (17) par l'intermédiaire de l'au moins une roue motrice (18, 19) et une batterie de traction (20) pour fournir une tension d'alimentation électrique au moteur d'entraînement électrique (3).

11. Programme informatique comprenant
un code de programme informatique, dans lequel le code de programme informatique est exécutable sur l'au moins un ordinateur, de sorte que l'au moins un ordinateur est amené à réaliser le procédé d'assemblage selon l'une quelconque des revendications 2 à 7, dans lequel au moins un des ordinateurs est : -intégré dans un équipement de bordure (21) d'un poste d'assemblage (22), de préférence en tant qu'ordinateur d'assemblage ou composant d'un ordinateur d'assemblage ; et/ou
- est configuré pour communiquer avec un nuage (23) sur lequel est fourni de préférence le code de programme informatique.

12. Produit de programme informatique sur lequel un code de programme informatique est stocké, le code de programme informatique étant exécutable sur au moins un ordinateur de telle sorte que l'au moins un ordinateur est amené à réaliser le procédé d'assemblage selon l'une quelconque des revendications 2 à 7, dans lequel au moins un des ordinateurs est :
- intégré dans un équipement de bordure (21) d'un poste d'assemblage (22), de préférence en tant qu'ordinateur d'assemblage ou composant d'un ordinateur d'assemblage ; et/ou
- configuré pour communiquer avec un nuage (23), sur lequel est fourni de préférence le code de programme informatique.
